# EUROPEAN PATENT APPLICATION

(11) **EP 2 543 447 A1**
(43) Date of publication of application: **09.01.2013**
(21) Application number: 11172769.9
(22) Date of filing: 05.07.2011
(51) Int. Cl.: B08B 7/00, B23K 26/06

(54) **Photo cleaning**

(71) Applicant: Nederlandse Organisatie voor Toegepast -Natuurwetenschappelijk Onderzoek TNO, 2628 VK Delft (NL)
(72) Inventor: te Sligte, Edwin, 2628 VK Delft (NL); Volker, Arno Willem Frederik, 2628 VK Delft (NL); Verberk, Rogier, 2628 VK Delft (NL); van der Donck, Jacques Cor Johan, 2628 VK Delft (NL)
(74) Representative: Jansen, Cornelis Marinus

(57) **Abstract**

A system and method are provided for cleaning a sub-micron particle (4p) off a substrate (5) in a substrate area to be cleaned (4a). The system comprises a photo pulse generator (13), a substrate holder (6), and a controller (14). The photo pulse generator (13) is arranged to generate a photo pulse pattern (7). The substrate holder (6) is arranged to hold a substrate (5). The controller (14) is arranged to control the photo pulse generator (13) and/or the substrate holder (6) to project the photo pulse pattern (7) on a substrate (5) held by the substrate holder (6). In particular, the controller (14) controls the photo pulse generator (13) to project the photo pulse pattern (7). In the system and method, a photo pulse pattern (7) is projected around the substrate area to be cleaned (4a) in such a way that shockwaves (8) generated by the photo pulse pattern (7) in the substrate (5) are emitted from different sides towards the substrate area to be cleaned (4a) so as to lead to a constructive enhancement of the shockwaves (8) in the substrate area to be cleaned (4a) to release the sub-micron particle (4p) from the substrate (5).

## Description

### FIELD AND BACKGROUND OF THE INVENTION

The present invention relates to a sub-micron particle photo cleaning system and method for cleaning sub-micron particles off a substrate in an area to be cleaned.

Removal of particles from e.g. wafers and reticles in semiconductor processed is an important issue e.g. for the quality of resulting products such as semiconductor chips. As the dimensions of characterizing features on the semiconductor products become ever smaller so the need arises to remove ever smaller particles. In particular there is a need to clean sub-micron particles from a substrate. Sub-micron particles are defined as particles having a maximal cross-section or diameter smaller than 1 µm (micrometer).

The problem of removing sub-micron particles, such as e.g. undesired small dust particles or other contaminating fragments on the substrate, is especially pertinent in current extreme ultraviolet (EUV) systems. Firstly, because these systems have more stringent needs with respect to contamination tolerance, i.e. the maximum size of contaminating particles that can be tolerated on a substrate. Secondly, in current EUV systems a pellicle cannot be used to shield the EUV reticle from unwanted contaminants. The tolerance is especially critical for contaminants on a reticle, because these lie in focus of an imaging plane.

Currently known photo cleaning techniques, i.e. cleaning techniques involving the use of light, may be categorized into wet and dry cleaning methods. Wet cleaning methods include e.g. steam laser cleaning wherein a thin layer of water or other fluid (e.g. isopropyl-alcohol) is applied on a surface and evaporated by laser exposure. A disadvantage of wet cleaning methods is that they are not easily applicable in current vacuum systems.

Dry photo cleaning methods are currently under investigation e.g. because in-line application in the wafer and reticle handling equipment is made possible. Current methods for dry photo cleaning include laser shock wave cleaning and direct laser cleaning.

Laser shock wave cleaning operates by focussing a laser beam into the air above a substrate area to be cleaned. The laser focus induces breakdown in the air and the resulting shockwave removes the particles from the substrate. The application depends on a sensitivity of the substrate. E.g. for reticles, particles larger than 1 µm can be removed. A disadvantage of laser shock wave cleaning is that a medium such as air is required above the substrate.

Direct cleaning methods operate by projecting a laser pulse onto a substrate area to be cleaned. The laser pulse causes a surface wave that dislodges the particle from the substrate. E.g. Hsu et al. (Optics & Laser Technology, Volume 38, Issue 7, October 2006, Pages 544-551) discuss removal mechanisms of micro-scale particles by surface wave in laser cleaning. In this known laser cleaning technique, a higher laser power may be required to remove smaller particles from the substrate. Unfortunately, the laser powers required to remove sub-micron particles may exceed the damage threshold of many of the commonly used reticle and wafer substrates.

There is a need for a system and method for photo cleaning sub-micron particles from a substrate without damaging the substrate.

### SUMMARY OF THE INVENTION

In a first aspect there is provided a sub-micron particle photo cleaning system for photo cleaning a sub-micron particle off a substrate in a substrate area to be cleaned. The system comprises a photo pulse generator, a substrate holder, and a controller. The photo pulse generator is arranged to generate a photo pulse pattern. The substrate holder is arranged to hold a substrate. The controller is arranged to control the photo pulse generator and/or the substrate holder to project the photo pulse pattern on a substrate held by the substrate holder. The controller controls the photo pulse generator to project the photo pulse pattern around the substrate area to be cleaned in such a way that shockwaves generated by the photo pulse pattern in the substrate are emitted from different sides towards the substrate area to be cleaned so as to lead to a constructive enhancement of the shockwaves in the substrate area to be cleaned to release the sub-micron particle from the substrate.

In a second aspect there is provided a method for photo cleaning a sub-micron particle off a substrate in a substrate area to be cleaned. The method comprises projecting a photo pulse pattern on the substrate around the substrate area to be cleaned. The photo pulse pattern is projected in such a way that shockwaves generated by the photo pulse pattern in the substrate are emitted from different sides towards the substrate area to be cleaned so as to lead to a constructive enhancement of the shockwaves in the substrate area to be cleaned to release the sub-micron particle from the substrate..

By applying the currently proposed technique, the predominant limitation of direct laser cleaning can be circumvented. The maximum amplitude of (ultrasonic) waves in laser cleaning is limited by the threshold laser intensity for substrate damage. The smaller a particle, the greater the wave amplitude that is required to remove it. Using the currently proposed technique, relatively modest laser intensity may be used to generate large wave amplitudes at the location of the particle. It is expected that the currently proposed technique can enable at least 20 times greater wave amplitudes than direct laser cleaning. As a result, it may clean particles that are presently too small to remove by other direct laser cleaning methods, without damaging the substrate.

The simplest arrangement of the photo pulse pattern is a concentric pattern such as an annular pattern, but a series of equidistant dots may also work. It is noted also that in case of patterned surfaces such as EUV reticles, it may be possible to calculate and subsequently project an optimized illumination pattern for generating maximum wave amplitude at the target location.

Advantages of the currently proposed technique may include: removal of nano particles, less or no damage to substrates, in-line cleaning possible, applicable in vacuum, no cross-contamination from cleaning medium, high cleaning rate possible, easy to combine with inspection, applicable to both dielectric and conducting particles.

Further advantages and areas of applicability of the present systems and methods will become apparent from the detailed description provided hereinafter. It should be understood that the detailed description and specific examples, while indicating exemplary embodiments of the method and system for automatic posture evaluation, are intended for purposes of illustration only and are not intended to limit the scope of the invention.

### BRIEF DESCRIPTION OF THE DRAWINGS

These and other features, aspects, and advantages of the apparatus, systems and methods of the present invention will become better understood from the following description, appended claims, and accompanying drawing wherein:
FIG 1 shows an embodiment of a photo cleaning system.
FIG 2 shows a schematic cross-section of a shockwave formed as a result of a photo pulse pattern on a substrate surface.
FIG 3 shows top views of different photo pulse patterns around the substrate area to be cleaned.
FIG 4 shows various beam shaping optics arranged for projecting a desired photo pulse pattern.
FIG 5 shows a photo cleaning system combined with a substrate inspection unit.
FIG 6 shows two advantageous arrangements for cleaning a particle.
FIG 7 shows an embodiment of a photo cleaning system wherein the photo pulse pattern is moved over the substrate surface.
FIG 8 shows different time frames of the photo cleaning system of FIG 7.

### DETAILED DESCRIPTION

The following description of certain exemplary embodiments is merely exemplary in nature and is in no way intended to limit the invention, its application, or uses. In the following detailed description of embodiments of the present systems, devices and methods, reference is made to the accompanying drawings which form a part hereof, and in which are shown by way of illustration specific embodiments in which the described devices and methods may be practiced. These embodiments are described in sufficient detail to enable those skilled in the art to practice the presently disclosed systems and methods, and it is to be understood that other embodiments may be utilized and that structural and logical changes may be made without departing from the spirit and scope of the present system. The following detailed description is therefore not to be taken in a limiting sense, and the scope of the present system is defined only by the appended claims. Moreover, for the purpose of clarity, detailed descriptions of well-known devices and methods are omitted so as not to obscure the description of the present system.

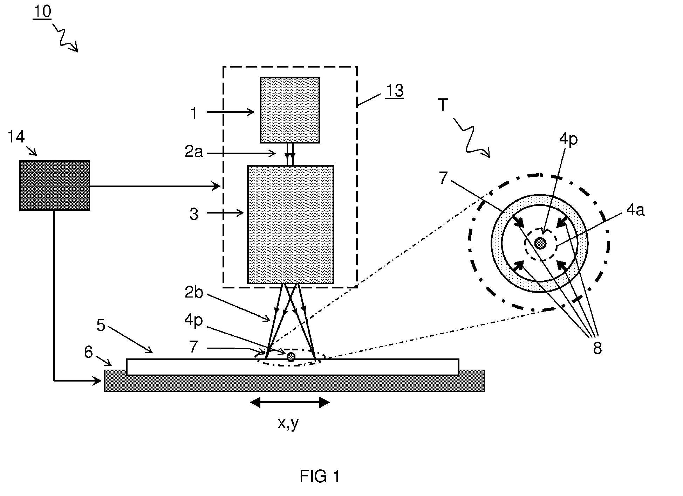

FIG 1 shows a sub-micron particle photo cleaning system 10 for photo cleaning a sub-micron particle 4p off a substrate 5 in a substrate area 4a to be cleaned. The system 10 comprises a photo pulse generator 13 and a substrate holder 6 for holding the substrate 5. The photo pulse generator 13 and substrate holder 6 are arranged to form a photo pulse pattern 7 on the substrate 5 around the substrate area 4a to be cleaned. In the shown embodiment, the photo pulse generator 13 comprises a pulsed light source 1 and beam shaping optics 3 arranged for transforming an output beam 2a from the light source 1 into beam 2b that will form the photo pulse pattern 7. Also shown in this embodiment, is an optional controller 14 to control the photo pulse generator 13 and/or substrate holder 6.

Without being bound by theory it is asserted that the photo pulse pattern 7 interacting with the substrate 5 causes a rapid thermal expansion in areas designated by the pattern. This thermal expansion may cause shockwaves in or on the substrate that emanate from the positions of interaction, i.e. from the projected pattern 7. The pattern is arranged such that converging shockwaves 8 are created and emitted from different sides towards the substrate area 4a to be cleaned. In particular the origins of the shockwaves 8 are chosen in such a way that the shockwaves 8 lead to a constructive enhancement, i.e. they constructively interfere, in the substrate area 4a to be cleaned. This constructive enhancement of the shockwaves 8, which in the current example may form a single shockwave front, causes an enhanced shockwave amplitude larger than that of the individual shockwaves and/or the initial shockwave front. In particular the convergence amplified shockwave amplitude at the substrate area 4a to be cleaned is enhanced enough to release the sub-micron particle from the substrate.

Correspondingly, there is provided an advantageous method for photo cleaning a sub-micron particle off a substrate in a substrate area to be cleaned. The method comprises projecting a photo pulse pattern on the substrate around the substrate area to be cleaned. The photo pulse pattern is arranged around substrate area to be cleaned. The impinging photo pulses, e.g. laser pulses or other short bursts of light may, cause the emission of shockwaves from different sides towards the substrate area to be cleaned. The shockwaves may lead to a constructive enhancement, i.e. their amplitudes add up constructively, at a position of the substrate area to be cleaned. In particular the enhanced shockwave is intense enough in amplitude and/or acceleration to release the sub-micron particle from the substrate.

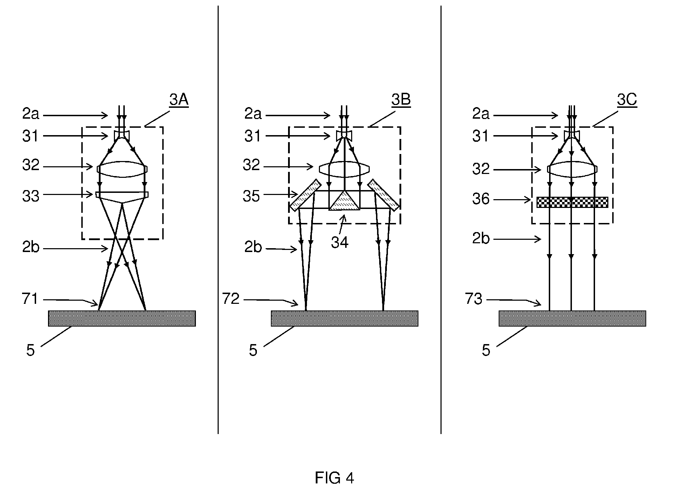

With continuing reference to FIG 1, top view T shows in more detail an advantageous photo pulse pattern 7 comprising an advantageous concentric pattern centered on the area 4a to be cleaned. The concentric pattern has an advantage that it may be relatively easy to produce. The concentric pattern may be advantageously used for a substrate having a more or less isotropic shockwave propagation speed so that all shockwaves arrive simultaneously at the center area which coincides with the area 4a to be cleaned. For other substrate surface characteristics, other photo pulse patterns may be used as will be illustrated e.g. in FIG 4. In any case the photo pulse pattern 7 should preferably be arranged such that the shockwaves lead to a constructive enhancement at the area to be cleaned.

In an advantageous embodiment the system comprises a controller arranged to control an intensity profile of photo pulses generated by the photo pulse generator and/or to control a position of a substrate held by the substrate holder relative to a projection of the photo pulses. For this, controller 14 may be operably connected to control e.g. an energy and/or shape of photo pulses generated by the photo pulse generator 13. The controller 14 may further adjust e.g. a power supplied to the light source 1 or introduce different filters into the light beam for adjusting an intensity of the photo pulse pattern 7. Also the shape of the beam 2b of photo pulses and consequently the projected pattern 7 may be adjusted, e.g. by rotating or shifting different optical components that may be part of the beam shaping optics 3.

In a further advantageous embodiment, controller 14 is operably connected to control a position of the substrate 5 held by the substrate holder 6 relative to a projected photo pulse pattern 7. This control may be effected e.g. by steering a motor stage connected to the substrate holder 6. The controller 14 may thus control the formation of a photo pulse pattern on the substrate around the substrate area to be cleaned. This control may comprise e.g. setting a position of the photo pulse pattern on the substrate or more general controlling an intensity profile of the photo pulse pattern, i.e. the spatial and temporal distribution of energy projected onto the substrate.

In an advantageous embodiment, the substrate holder 6 is arranged for lateral movement of the substrate 5 with respect to the photo pulse pattern 7 in an x and/or *y* direction for moving the substrate area 4a to be cleaned to different areas of the substrate 5. Of course such a relative movement may be effected either by moving the substrate holder 6 or by moving the photo pulse pattern 7, e.g. by shifting or rotating a mirror (not shown) used for projecting the pattern 7 onto the substrate 5. The movement of the substrate holder may e.g. be controlled by the controller 14.

The controller 14 may be any type of controller and/or processor which is configured to perform operational acts in accordance with the present systems and methods, such as to control the photo pulse generator 13 and/or substrate holder 6 to form a desired photo pulse pattern 7 on the substrate 5. The controller 14 may be an application-specific or general-use integrated circuit. The controller may include micro-processors, central processing units (CPUs), digital signal processors (DSPs), ASICs, or any other processor(s) or controller(s).

The processor may e.g. be under software control, and may comprise or communicate with memory that stores the software and other data such as user preferences. The memory may further be used e.g. for storing a position of particles to be cleaned on the substrate and/or a structure of the substrate e.g. for generating a photo pulse pattern adapted to the structure of the substrate. The controller may be provided with feedback, e.g. a position of the substrate 5 with respect to the projected photo pulse pattern 7. Further feedback may comprise e.g. a status of the particle 4p to be cleaned, e.g. provided by an optional substrate inspection unit (not shown here).

In the currently shown embodiment in FIG 1, an output beam 2a of the photo pulse generator is shaped by beam shaping optics 3 into an output beam 2b which forms a desired photo pulse pattern 7 on a surface of the substrate 5. Alternatively, the light source 1 is already arranged by itself to produce a desired pattern 7 and the beam shaping optics 3 may be dispensed with.

The photo pulse generator 13 may be any suitable light source capable of generating photo pulses, such as a pulsed laser system or plasma source. The photo pulse generator 13 may comprise one light source or multiple light sources working together to deliver the photo pulses 2a or 2b. The light sources may be coherent, e.g. a single laser or phase-locked laser system, or incoherent, e.g. a plasma source or other source of short light bursts. The coherence of the photo pulses may advantageously contribute to constructive interference of the shockwaves, though this may be mostly determined by the photo pulse envelope rather than the underlying phase.

It is to be appreciated that the envelope and/or the phase of the pulse can be correlated to the energy that is deposited per unit of time into the substrate. For a given average power output, shorter pulses may be equated to higher pulse intensity per unit of time, resulting in higher shockwave amplitudes. Accordingly, in an advantageous embodiment the photo pulses have a pulse duration < 5 ns (smaller than 5 nanoseconds), preferably < 1 ns with a pulse energy >10 mJ (greater than 10 millijoules), preferably >30 mJ per pulse to deliver a high enough intensity profile for the effect of removing sub-micron particles.

On the other hand, such highly intense pulses may damage the substrate if they are not spread out over a large enough surface of the substrate. Accordingly, in an advantageous embodiment the photo pulse pattern on the substrate is arranged (i.e. spread out enough) to have an intensity profile < 1 J/cm², preferably < 500mJ/cm². To prevent steady state buildup of energy on the substrate the pulse frequency should also not be too high. In a typical process setting a pulse frequency of 50 Hz (Hertz) is used, though of course this frequency may be higher dependent on the other process parameters such as the pulse energy, duration, and intensity profile. Alternatively, for high laser frequencies, a burst operation mode may be considered.

The term "photo" may in general refer to electromagnetic radiation of any wavelength, preferably e.g. in a range of 100-1000 nm (nanometer). Many materials used for substrates have a high absorption in the ultraviolet frequency range. Accordingly, in an advantageous embodiment the photo pulses have ultraviolet frequencies, e.g. having a wavelength < 200 nm, e.g. in a range of 100-200 nm or smaller. Suitable substrates include e.g. Si wafers, GO-flat optic samples, absorber stack sampler, reticles, etc.

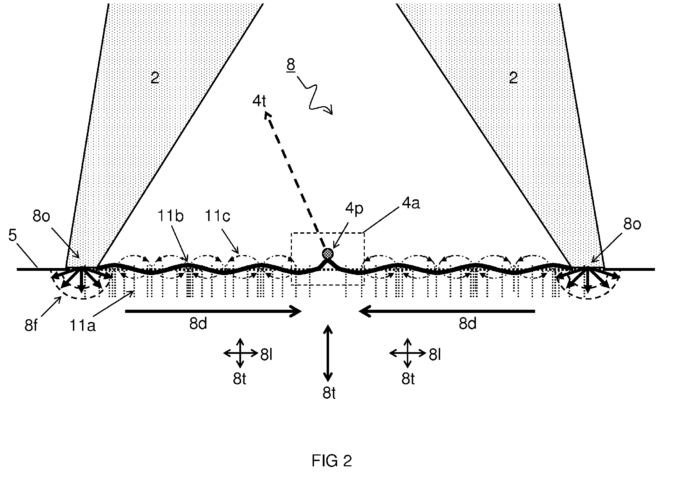

FIG 2 shows a schematic picture of beams 2 impinging on a surface of substrate 5 and interacting therewith. The interaction may lead to shockwaves 8 emanating from an origin 80. While the shockwave front 8f may propagate in all directions depending e.g. on the thermal expansion coefficient of the substrate, we are currently mostly interested in the shockwaves that propagate inwards along the surface in a propagation direction 8d towards a central substrate area 4a to be cleaned. These shock waves on the substrate surface may propagate at ultrasonic speeds, i.e. faster than the speed of sound in air.

Without being bound to theory, the shockwaves 8 may be described as Rayleigh waves comprising both longitudinal (tangential) components 81 and transversal components 8t. The longitudinal components 81 may manifest as density fluctuation indicated with vertical dashed lines 11a. The transversal components 8t may manifest as corrugation fluctuations 11b of the substrate surface. The total resulting movement of the substrate surface may be in a circular or ellipsoidal trajectory as is schematically indicated with the dash-dotted arrows 11c. Whereas it may be that the longitudinal waves arrive in counter phase at the center of the projected pattern, in particular the transversal waves may constructively interfere to form a constructive enhancement of the shockwave at the area 4a. Further it is to be appreciated that when the surface makes an elliptical motion during the shock waves, the tangential component of this motion may make particle removal even more efficient. In advantageous embodiment it may thus be beneficial to provide the pattern slightly off-center with respect to the particle to be cleaned to make use of this tangential component though centered enough to benefit from the constructive enhancement of the shockwaves.

A sub-micron particle 4p, situated in the area 4a may be released from the substrate by the enhanced amplitude of the shockwave and fly off in a release trajectory 4t. Optionally the pattern formed by beams 2 may be projected off-center with respect to the particle 4p for steering the particle in a desired direction, e.g. away from critical optics and/or onto a collection device (not shown).

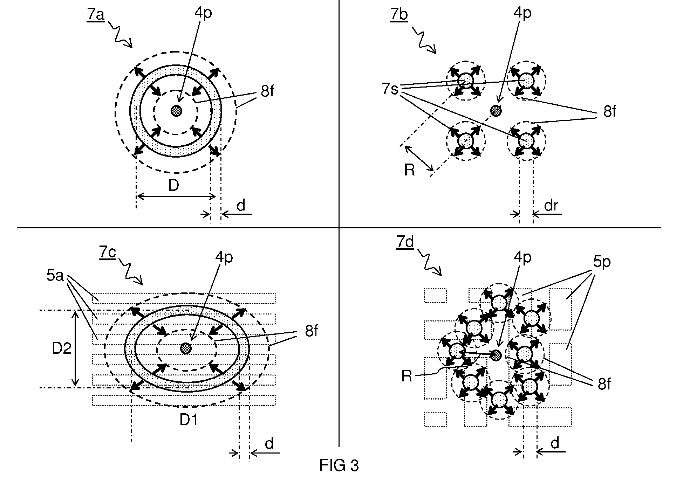

FIG 3 shows top views of different photo pulse patterns around the substrate area to be cleaned. The term 'photo pulse pattern" refers to a specific pattern projected by a beam of photo pulses onto a substrate.

With reference to photo pulse patterns 7a, this pattern comprises an annular pattern centered on an area to be cleaned with a particle 4p. As was surmised above, the projected pattern may generate shockwaves that are illustrated here by a shockwave front 8f. In fact for the annular pattern there may be two fronts, one moving outwardly and one moving inwardly. Whereas the outward moving front may lose intensity as it moves further away from the point of origin, the inward moving front may gain intensity as the shockwaves constructively interfere going towards a central point.

In an advantageous embodiment, the rim thickness d is thin enough such that not more than a single wavelength, preferably less than half a wavelength, of the propagating (acoustic) shockwaves in the substrate surface fits in the rim thickness d. In that case the rim may be treated as a source with a well defined phase for the resulting shockwaves. Accordingly in an advantageous embodiment, the annular pattern has a rim thickness d < 10 µm, which may be smaller than half a wavelength of a typical acoustic wave. It is to be appreciated that the amplitude of the shockwaves may diminish as a function of distance from the point of origin. This may be the result of e.g. friction losses but also because some part of the shockwaves may propagate into the material rather than stay at the surface. Accordingly, in an advantageous embodiment the ring diameter D < 2 mm. On the other hand, for too small a ring size, the intensity at the target position may not be sufficient for effective particle removal. Therefore in an advantageous embodiment the ring diameter D > 1 mm. The ring diameter should preferably be large enough to cause several orders of enhancement.

With reference to photo pulse patterns 7b, this pattern comprises four dots 7s with diameter d at approximate equal radial distances R from a central cleaning area where a particle 4p to be cleaned is located. The dots may be created e.g. by laser beams. The dots 7s of the pattern 7b create shockwaves with wave fronts 8f emanating in all directions. To provide sufficient constructive enhancement at the center while not damaging the substrate, the number of dots should be more than two, preferably more than three, more preferably four or more dots. Ultimately of course when the number of dots 7s becomes large enough a similar pattern as 7a will be formed. For similar arguments as given above for pattern 7a the spot diameter *dr* is preferably < 10 µm, to provide a narrow wave front 8f. Similarly the argument for the desired diameter may be translated to the desired radial distance R wherein the radius corresponds to half the diameter D. Accordingly in an advantageous embodiment the radial distance R of the spots complies with 0.5 mm < R < 1 mm.

With reference to photo pulse patterns 7c, this pattern is similar to pattern 7a though comprising an ellipsoid rather than a circle. In this case the diameter *D1* is different from the diameter *D1* to compensate for anisotropic wave propagation speeds in different directions. Such anisotropic wave propagation speeds may e.g. be the result of an anisotropic pattern that is part of the substrate to be cleaned. In this case the substrate may e.g. be a reticle comprising a line pattern, wherein the shock waves propagate faster in a direction along the lines than perpendicular to the lines. The diameters *D1, D2* should be chosen such that while compensating for this difference in propagation speed, the waves 8f from all directions arrive simultaneously at a central position to provide constructive enhancement near the particle 4p. Accordingly, in an advantageous method, the photo pulse pattern 7c is calculated based on a time of arrival of the shockwaves at a center position. Preferably, said calculation takes into account an influence of a surface pattern 5a of the substrate to be cleaned.

Accordingly in an advantageous embodiment the controller comprises a memory arranged to store surface information on a surface structure of the substrate around the area to be cleaned and the controller is arranged to vary the photo pulse pattern on the substrate as a function of said surface information. Said variation may be effected e.g. by varying an output energy of the light source, position or angle of the beam shaping optics, and/or position of the substrate holder (see e.g. FIG 1). Said surface information may comprise e.g. the (known) layout of a reticle pattern. In a further advantageous embodiment, the controller is arranged to vary the photo pulse pattern on the substrate as a function of a calculated time of arrival of shock waves at the area to be cleaned.

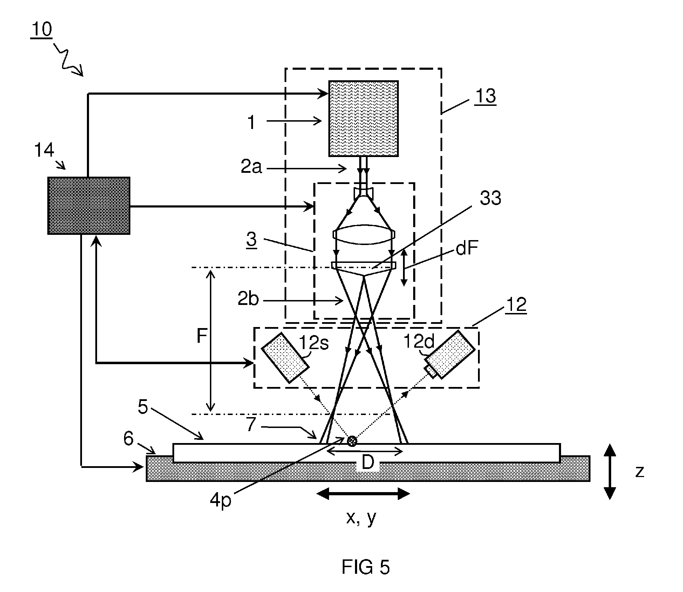

With reference to photo pulse patterns 7d, this pattern comprises a very specific arrangement of dots. The specific arrangement 7d can e.g. be calculated or derived using an inspection tool such as will be discussed with reference to FIG 5. In particular the pattern 7d is arranged such that wave fronts 8f of the shock waves resulting from the impinging photo pulses at the spots approximately simultaneously at a cleaning area where a particle 4p is located. The shock wave propagation speed may in particular be influenced by a local pattern 5p that may be part e.g. of a reticle. A specific pattern 7d such as shown may be created e.g. using multiple laser spots reflected of a plurality of adjustable mirrors or using a beam shaping optics comprising an LCD filter as will discussed with reference to FIG 4 (arrangement 3C).

FIG 4 shows various examples of advantageous beam shaping optics 3A-3C arranged for projecting a desired photo pulse pattern.

With reference to beam shaping optics 3A, a collimated input beam 2a from a light source such as a laser enters diverging or negative lens 31. The resulting diverging light beam is re-collimated by collimating or positive lens 32. The collimated enlarged beam enters positive axicon 33. An axicon is a specialized type of lens which has a conical surface. An axicon images a point source into a line along the optic axis, or transforms a collimated beam into a ring. The resulting output beam 2b creates a focused annulus or ring pattern 71 onto substrate 5.

With reference to beam shaping optics 3B, a collimated input beam 2a from a light source such as a laser enters diverging or negative lens 31. The resulting diverging light beam is re-collimated by collimating or positive lens 32. The collimated enlarged beam impinges on reflecting prism 34 to split the beam into multiple sub beams. The sub beams are reflected and directed by focussing mirrors 35 to form a pattern 72 of focused spots on the substrate 5. The number of sub beams may depend on the number of facets on the reflecting prism 34. For a large number of facets, e.g. the reflecting prism may become a conical reflector that ultimately projects a ring pattern onto the substrate 5.

With reference to beam shaping optics 3C, a collimated input beam 2a from a light source such as a laser enters diverging or negative lens 31. The resulting diverging light beam is re-collimated by collimating or positive lens 32. The collimated enlarged beam impinges on controllable filter 36. The controllable filter 36 may be e.g. an LCD screen where the transmission of parts of the impinging beam is controlled by switching on and off parts of the screen. In such a way an arbitrary pattern 73 may be formed on substrate 5. Accordingly, in an embodiment the photo pulse generator is arranged to provide a variable intensity profile of the photo pulse pattern on the substrate. Such a variable intensity profile may be advantageous e.g. for adapting the pattern based on a size of the particle or a specific surface structure topology such as shown in FIG 4.

It is noted that all of the projected pattern 71 - 73 may be focused or not depending on the intensity requirements for forming shockwaves on the substrate. Also a collimated beam without focus may be used.

FIG 5 shows a photo cleaning system 10 comprising a substrate inspection unit 12.

The photo cleaning system 10 comprises a light source 1 emitting photo pulses in the form of a beam 2a. Beam shaping optics 3 transform collimated input beam 2a into shaped output beam 2b. The shaped output beam 2b in this case comprises an annular pattern that is focused on a particular focus distance F relative to the beam shaping optics 3. The annular pattern 7 has a diameter D that varies in a z direction normal to the surface area of the substrate 5. It is to be appreciated that the changing focusing conditions and/or the divergence of the projected pattern in the z direction, means that an intensity profile and/or radius of the projected pattern 7 may vary along this direction. Accordingly, in an advantageous embodiment the substrate holder 6 is arranged for moving the substrate 5 in said z direction normal to the substrate area for varying the intensity profile or radius of the photo pulse pattern on the substrate 5. An increased radius and lower intensity profile may be advantageous e.g. for cleaning larger particles from larger areas.

The photo cleaning system 10 may advantageously comprise an optional substrate inspection unit 12 arranged for inspecting the substrate for particles 4p to be cleaned. The shown substrate inspection unit 12 comprises a source 12s and a detector 12d. The source may emit e.g. electromagnetic or other radiation that bounces or reflects of a surface of the substrate. When radiation from the source hits the particle 4p, it may be detected by the detector 12d. For example, the radiation may be specifically absorbed or reflected from the particle and it may be detected e.g. from its particular fingerprint spectrum. Alternatively, the particle may be detected e.g. from a phase shift of the reflected beam caused by the height of the particle. Phase shift detection systems include e.g. a Michelson Interferometer setup.

Optionally the source 12s may be omitted and e.g. light from the already present light source 1 may be synergistically used, e.g. by scattering or reflecting this light of the particle 4p when scanning the pattern 7 over the substrate. Alternatively, e.g. an inspection system such as a conventional or electron microscope, or other visual inspection tool comprising a camera and image recognition software may be used to detect the particles. Alternatively, e.g. spectrographic systems could be used to detect particular undesired material on the substrate.

Once an unwanted particle 4p has been detected, the photo cleaning system 10 may proceed with cleaning the particle as described above. In an advantageous embodiment shown in FIG 5, the substrate inspection unit 12 may be integrated into the photo cleaning system 10. Feedback from the substrate inspection unit 12, e.g. the detection of an unwanted particle 4p, may be received by controller 14 and used to control the photo pulse generator 13 and/or the substrate holder 6.

In an advantageous embodiment, a position of the particle to be removed can be detected by the substrate inspection unit 12 and the controller moves the substrate holder to center the photo pulse pattern 7 such that the particle is removed. In a further advantageous embodiment a size of the particle to be removed is detected by the substrate inspection unit 12 and an intensity profile of the projected photo pulse pattern is adjusted by the controller accordingly such that the particle may be removed. The controller may e.g. adjust a power of the light source 1, an arrangement of the beam shaping optics 3, e.g. by changing a position dF of the focusing axicon 33, and/or a position of the substrate holder for controlling said intensity profile.

In an advantageous embodiment, shockwaves generated by the photo pulse pattern 7 are used in the detection of particles 4p. E.g. by recording a time-dependent interferometry response of a center of the projected pattern, any influence of particles on the propagation of the shockwaves may be monitored and the presence of particles may thus be inferred. It is noted that a method for ultrasonic characterization of layered materials and crack detection is discussed by Cielo et al. (Ultrasonics, Volume 23, Issue 2, March 1985, Pages 55-62). This known materials and crack detection method does not teach or suggest the removal of particles nor would it be suitable for removal of sub-micron particles due to its experimental characteristics.

The detection of particles may require less intense shockwaves than necessary for their removal. Therefore, in an advantageous embodiment the above described substrate inspection unit 12 is combined with a substrate holder that is arranged for moving the substrate in a direction normal to the substrate area for varying the intensity profile or radius of the photo pulse pattern on the substrate. In operation, the substrate holder may be moved to expand the projected concentric pattern for detecting particles over a larger area. When a particle is found, the substrate holder may move closer to the projected beam 12b and decrease the size of the concentric pattern. The pattern can be decreased in size until a sufficient intensity is reached to remove the particle from the substrate. The condition of the unwanted particle can be conveniently monitored simultaneously by the substrate inspection unit 12. In this way the intensity does not have to be increased beyond a level necessary for the removal of the particle.

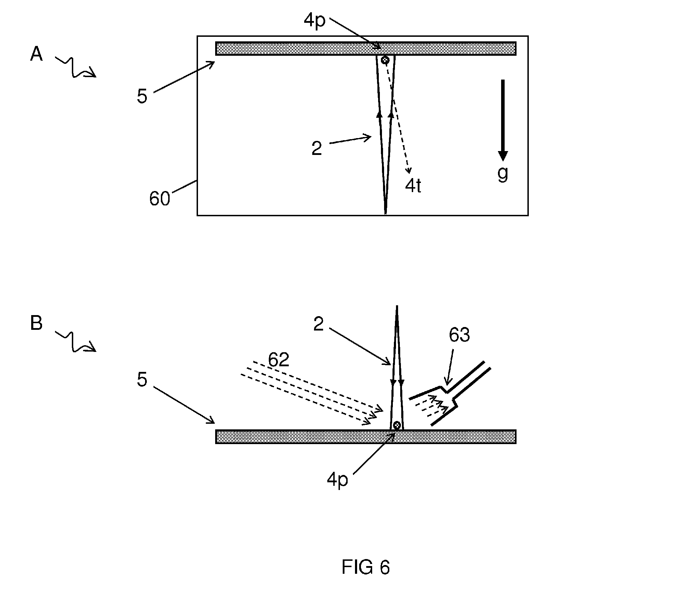

FIG 6 shows two advantageous arrangements for cleaning a particle of a substrate.

Arrangement A shows a substrate 5, such as a reticle, situated inside a vacuum chamber 60. Photo pulse beam 2 impinges from a bottom side of the substrate 5 to detach a particle 4p. Once the particle is detached from the surface it may conveniently be pulled down by a gravitational force g away from the substrate, e.g. along a trajectory 4t.

Arrangement B shows a substrate 5, such as a reticle or wafer, with a particle 4p being detached by photo pulse beam 2. Once detached, particle 4p may conveniently be carried away by gas flow 62 into gas exhaust 63. Accordingly in an advantageous embodiment, the photo cleaning system comprises a gas outlet for generating a gas flow 62 over the substrate area to be cleaned for carrying away the particle to be cleaned. The gas inlet/exhaust system can function e.g. when the linear gas velocity is about 1 cm/s. Flow rates should preferably be kept relatively low. Otherwise particles from surrounding areas can be attracted. It is also possible to use either an exhaust or a gas inlet or a horizontal (non localized) gas flow.

Of course it is to be appreciated that many other arrangements are possible. E.g. when the ballistic energy of the released particle 4p is sufficient, it may fly off the substrate irrespective of the gravitational vector. The direction may be influenced by aiming the pattern off-center with respect to the particle. A sub-micron particle, once detached from a substrate, may not be of much consequence when drifting around the cleaning apparatus. Also the particle is likely to get trapped by optically inactive components such as the walls of the cleaning system.

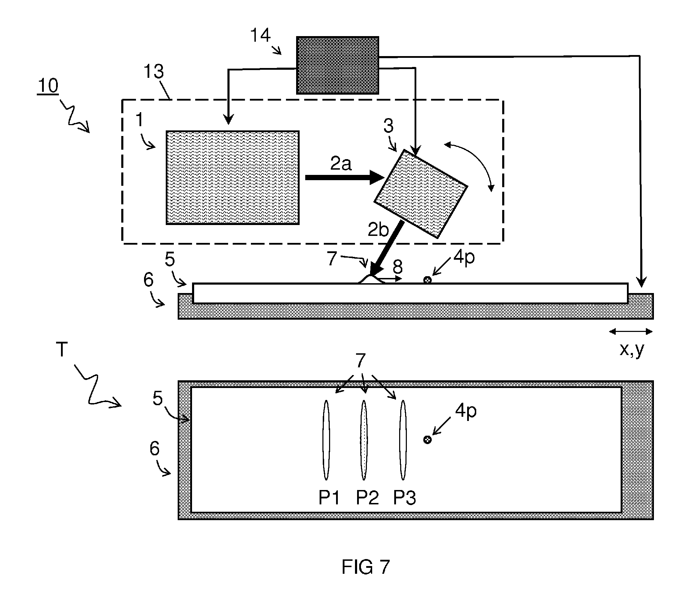

FIG 7 shows an embodiment of a photo cleaning system 10 wherein a controller 14 is arranged to control a substrate holder 6 and a photo pulse generator 13, comprising a light source 1 and beam shaping optics 3. The light source 1 generates a photo pulse beam 2a that enters beam shaping optics 3 and exits as shaped photo pulse beam 2b to provide projected photo pulse pattern 7. The controller 14 is arranged to control the photo pulse generator 13 and/or the substrate holder 6 to project a moving photo pulse pattern 7 onto the substrate 5 in phase with a shock wave 8 propagating over the surface of the substrate, e.g. towards a particle 4p to be cleaned. Advantageously, the propagating shock waves 8 may thus be constructively enhanced by a plurality of photo pulses.

In top view T of the substrate 5, three subsequently projected photo pulses patterns 7 are shown corresponding to different photo pulses P1, P2, and P3. Each subsequent pulse is projected in phase, i.e. substantially coinciding, with the propagating wave front (not shown) generated by the previous pulse(s). The photo patterns 7 are shown as elongate lines which may result in a linear wave front. Advantageously, line waves may maintain a more constant intensity during propagation since they have less to no divergence (though e.g. friction losses may still occur). Of course other patterns may be used e.g. a series of concentric rings with radii that decreases from one pulse to the next in correspondence with an inwardly propagating wave front. In general the principle may be expanded to a series of subsequent photo pulse patterns that evolve in relative position to follow and enhance a moving shock wave front.

To move the photo pattern 7 over the surface, the controller may e.g. control an orientation of a rotating mirror that may be part of beam shaping optics 3 to move the photo pulse pattern over the substrate. Alternatively or in conjunction the controller may control the substrate holder 6 to move the position x, y of the substrate 5 with respect to the projected photo pulse pattern 7. Furthermore, if necessary the controller may control a timing and/or energy of photo pulses generated by the light source 1 such that the projected pattern 7 moves in sync with the propagating shock waves 8.

In stead of a pulsed light source, also a continuous light source such as a continuous laser beam may be used for scanning along with the propagating wave front. E.g. the continuous light source may be projected in sync with the propagating shock waves to create an enhanced shock wave front that has sufficient amplitude to clean a sub micron particle 4p off the substrate.

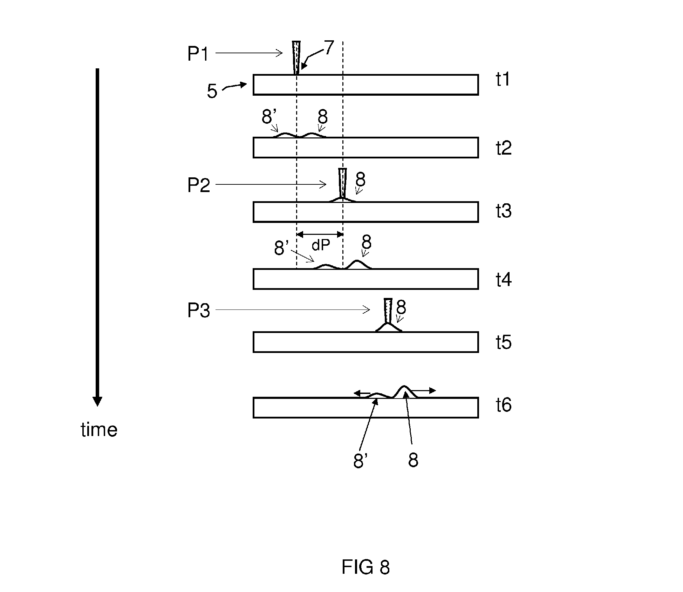

FIG 8 shows different time frames of the photo cleaning system of FIG 7. Different snapshots or frames t1 ― t6 are shown of the substrate 5 as a function of time. In the subsequent time frames t1 ― t6, three pulses P1 ― P3 result in photo pulse patterns 7 that are projected on different positions of the substrate 5. In time frame t1 a first pulse P1 is projected on the substrate. In subsequent frame t2 shock waves 8 and 8' propagate in different directions from the point of origin where the pulse P1 impinged the substrate 5.

In a next timeframe t3, a second pulse P2 impinges the substrate at a different position, distanced dP from position of the first pulse P1. The second pulse P2 is controlled in timing and position such that it substantially coincides with a propagating wave front of the shock waves 8 generated by the earlier pulse P1. In particular, the timing and position of the second pulse P2 are tuned such that constructive enhancement of the propagating shock waves 8 is achieved. It is noted that for each impinging pulse a shock wave 8' may propagate in the opposite direction as the main shock wave 8 that is enhanced. Without enhancement the other shockwave 8' may quickly diminish in amplitude as it propagates.

To constructively enhance the propagating shock wave 8 while it propagates towards an area to be cleaned, the photo pulse pattern 7 should preferably be moved over the substrate surface substantially with a speed corresponding to the propagation speed of surface shock waves on the substrate. Preferably, the distance dP equals the shock wave propagation speed divided by the repetition time of the photo pulses. E.g. a pulsed light beam with light pulses every 20 ns may impinge the substrate surface with a 100 µm pulse-to-pulse distance dP to coincide with a shock wave propagating at 2000 m/s over the substrate surface. As a light source e.g. a modified blu-ray laser may be used having a frequency that can be modulated up to > 100 MHz.

Further pulses P3 and more may be used to enhance the shock wave 8 as it propagates over the substrate surface until a desired intensity is attained. At some point the shock wave amplitude may be sufficient to remove sub micron particles from the surface. Subsequent pulses may then be used e.g. for maintaining this amplitude along a trajectory of the substrate area to be cleaned. In this way large areas of the substrate may be cleaned with a single propagating shock wave that is enhanced or maintained while traversing the surface. Accordingly, an advantageous photo cleaning system may comprise a photo pulse generator arranged for projecting a photo pattern onto a substrate, which photo pattern is moved or scanned along a surface of the substrate with a speed corresponding to a propagation speed of shock waves on the substrate surface. In stead of photo pulses, the beam creating the photo pattern may also be a continuous light beam that moves with the shock wave front over the substrate.

The above disclosed cleaning techniques may be referred to by the inventors as of convergence amplified laser ultrasonics (CALU). The various elements of the embodiments as discussed and shown offer certain advantages, such as cleaning sub-micron particle off a substrate. Of course, it is to be appreciated that any one of the above embodiments or processes may be combined with one or more other embodiments or processes to provide even further improvements in finding and matching designs and advantages. It is appreciated that this invention offers particular advantages for cleaning wafers and reticles in semiconductor processes and in general can be applied for any system wherein particles or other materials are to be removed from a surface. It is noted that also any kinematic inversions having similar functionality are considered as part of the disclosure, e.g. while it is shown in the figures that the substrate is movable with respect to an impinging light beam, the light beam may also be movable.

This description of the exemplary embodiments is thus intended to be read in connection with the accompanying drawings, which are to be considered part of the entire written description. In the description, relative terms as well as derivative thereof should be construed to refer to the orientation as then described or as shown in the drawing under discussion. These relative terms are for convenience of description and do not require that the apparatus be constructed or operated in a particular orientation. Terms concerning attachments, coupling and the like, such as "connected" and "interconnected," refer to a relationship wherein structures are secured or attached to one another either directly or indirectly through intervening structures, as well as both movable or rigid attachments or relationships, unless expressly described otherwise.

Finally, the above-discussion is intended to be merely illustrative of the present system and should not be construed as limiting the appended claims to any particular embodiment or group of embodiments. Thus, while the present system has been described in particular detail with reference to specific exemplary embodiments thereof, it should also be appreciated that numerous modifications and alternative embodiments may be devised by those having ordinary skill in the art without departing from the broader and intended spirit and scope of the present system as set forth in the claims that follow. The specification and drawings are accordingly to be regarded in an illustrative manner and are not intended to limit the scope of the appended claims.

In interpreting the appended claims, it should be understood that the word "comprising" does not exclude the presence of other elements or acts than those listed in a given claim; the word "a" or "an" preceding an element does not exclude the presence of a plurality of such elements; any reference signs in the claims do not limit their scope; several "means" may be represented by the same or different item(s) or implemented structure or function; any of the disclosed devices or portions thereof may be combined together or separated into further portions unless specifically stated otherwise; no specific sequence of acts or steps is intended to be required unless specifically indicated; and no specific ordering of elements is intended to be required unless specifically indicated.

## Claims

1. A sub-micron particle photo cleaning system (10) for photo cleaning a sub-micron particle (4p) off a substrate (5) in a substrate area to be cleaned (4a), the system (10) comprising
- a photo pulse generator (13) arranged to generate a photo pulse pattern (7);
- a substrate holder (6) arranged to hold a substrate (5); and
- a controller (14) arranged to control the photo pulse generator (13) and/or the substrate holder (6) to project the photo pulse pattern (7) on a substrate (5) held by the substrate holder 6); wherein
- the controller (14) controls the photo pulse generator (13) to project the photo pulse pattern (7) around the substrate area to be cleaned (4a) in such a way that shockwaves (8) generated by the photo pulse pattern (7) in the substrate (5) are emitted from different sides towards the substrate area to be cleaned (4a) so as to lead to a constructive enhancement of the shockwaves (8) in the substrate area to be cleaned (4a) to release the sub-micron particle (4p) from the substrate (5).

2. System according to claim 1, wherein the photo pulse pattern (7) comprises a concentric pattern centered on the area to be cleaned (4a).

3. System according to claim 2, wherein the concentric pattern comprises an annular pattern.

4. System according to claim 2, wherein the concentric pattern comprises two or more spots at equal distances from the area to be cleaned.

5. System according to any of the previous claims, wherein the photo pulse generator (13) comprises a pulsed light source (1) and beam shaping optics (3) arranged for transforming an output beam (2a) from the pulsed light source (1) into the photo pulse pattern (7).

6. System according to any of the previous claims, wherein the substrate holder (6) and photo pulse pattern (7) are arranged for relative lateral movement and the controller (14) is arranged to control a position (x, y) of the substrate area to be cleaned (4a) on the substrate (5) for cleaning different areas of the substrate (5).

7. System according to any of the previous claims, wherein the photo pulse generator (13) is arranged to provide a variable intensity profile of the photo pulse pattern (7) on the substrate (5).

8. System according to any of the previous claims, wherein the system further comprises a substrate inspection unit (12) arranged for communicating particle information to the controller (14); and the controller (14) is arranged to vary a position and/or intensity profile of the photo pulse pattern (7) on the substrate (5) as a function of said particle information.

9. System according to any of the previous claims, wherein the controller (14) comprises a memory arranged to store surface information on a surface structure of the substrate (5) around the area to be cleaned (4a) and the controller is arranged to vary a position and/or intensity profile of the photo pulse pattern (7) on the substrate (5) as a function of said surface information.

10. System according to any of the previous claims, further comprising a gas outlet arranged for generating a gas flow (62) over the substrate area to be cleaned (4a) for carrying away the particle to be cleaned.

11. System according to any of the previous claims, wherein the laser pulses are sub-nanosecond laser pulses with an energy > 30 mJ per pulse.

12. System according to any of the previous claims, wherein the photo pulse pattern (7) on the substrate (5) is arranged to have an intensity profile < 1 J/cm².

13. System according to claim 3, wherein the annular pattern has a rim thickness (d) < 10 micrometers and a diameter (D) of 1 - 2 mm.

14. System according to any of the previous claims, wherein the controller (14) is arranged to control the photo pulse generator (13) and/or the substrate holder (6) to project a moving photo pulse pattern (7) onto the substrate (5) in phase with a shock wave (8) propagating over the substrate (5) thereby enhancing an amplitude of the shock wave.

15. Method for photo cleaning a sub-micron particle (4p) off a substrate (5) in a substrate area to be cleaned, the method comprising projecting a photo pulse pattern (7) on the substrate around the substrate area to be cleaned (4a) in such a way that shockwaves (8) generated by the photo pulse pattern (7) in the substrate (5) are emitted from different sides towards the substrate area to be cleaned (4a) so as to lead to a constructive enhancement of the shockwaves (8) in the substrate area to be cleaned (4a) to release the sub-micron particle (4p) from the substrate (5).
